# EUROPÄISCHE PATENTSCHRIFT

(11) **EP 1 790 514 B1**
(45) Veröffentlichungstag und Bekanntmachung des Hinweises auf die Patenterteilung: **25.08.2010**
(21) Anmeldenummer: 07090015.4
(22) Anmeldetag: 09.10.2001
(51) Int. Cl.: B60J 5/04

(54) **Türmodulträger**
Door module support
Module d'équipement de porte

(30) Priorität: 10.10.2000 DE 10050322
(43) Veröffentlichungstag der Anmeldung: 30.05.2007
(62) Teilanmeldung aus: 01986646.6
(73) Patentinhaber: Brose Fahrzeugteile GmbH & Co. KG, Coburg, 96450 Coburg (DE); Visteon Global Technologies, Inc., Dearborn, Michigan 48126 (US)
(72) Erfinder: Reul, Dennis, 96274 Schottenstein (DE); Florentin, Thierry, 96450 Coburg (DE); Stelandre, Bertrand, 59242 Capelle-en-Pevele (FR); Leconte, Herve, 59554 Bantigny (FR)
(74) Vertreter: Baumgärtel, Gunnar

(56) Entgegenhaltungen:
- EP-A- 0 811 516
- WO-A-00/23294
- DE-A1- 3 217 640
- JP-A- 59 084 621

## Beschreibung

Die Erfindung betrifft einen Türmodulträger nach dem Oberbegriff des Patentanspruchs 1.

Ein derartiger Türmodulträger dient zur Befestigung an einem Türkörper, z.B. an der Türinnenhaut einer Kraftfahrzeugtür, zwischen dem Nassraum und dem Trockenraum eines Fahrzeugs und wird durch eine Trägerplatte gebildet, die eine Vielzahl unterschiedlicher Funktionselemente einer Fahrzeugtür, wie z.B. einen Fensterheber, ein Türschloss, einen Türgriff, Kabelstränge sowie eine Türinnenverkleidung aufnehmen kann. Diese Funktionselemente können mit dem Türmodulträger zu einer vormontierten, vorprüfbaren Baugruppe (Türmodul) zusammengefasst werden, die als Ganzes an dem Türkörper einer Fahrzeugtür befestigt wird.

Hierfür weist der Türmodulträger erste Befestigungsstellen auf, die zur Befestigung der Trägerplatte an dem genannten Türkörper dienen, wobei im befestigten Zustand eine Oberfläche der Trägerplatte dem Trockenraum und die andere Oberfläche der Trägerplatte dem Nassraum des Fahrzeugs zugewandt ist. Die Trägerplatte liegt dabei an dem Türkörper mit einer (regelmäßig im Bereich ihres Randes) umlaufenden Dichtungskontur an, so dass eine flüssigkeitsdichte Trennung zwischen dem Nassraum und dem Trockenraum der Fahrzeugtür gewährleistet wird. Die Trägerplatte kann dabei insbesondere über eine umlaufende Dichtraupe oder vergleichbare Dichtelemente an dem Türkörper anliegen.

Darüber hinaus weist die Trägerplatte zweite Befestigungsstellen auf, die zur Befestigung der vorstehend genannten Funktionselemente an der Trägerplatte vorgesehen sind.

Ein derartiger Türmodulträger ist beispielsweise aus der WO 96/28314 bekannt.

Auch aus den gattungsgemäßen EP 0 811 516 A2 ist ein Türmodulträger bekannt, der Befestigungsstellen zur Befestigung eines Schlossträgers an dem Türmodulträger aufweist, die jenseits einer Dichtungskontur des Türmodulträgers angeordnet sind. Die Befestigungsstellen sind dabei für eine Schraubverbindung vorgesehen.

Der Erfindung liegt die Aufgabe zugrunde, einen Türmodulträger der eingangs genannten Art weiter zu verbessern, insbesondere im Hinblick auf die Befestigung der Funktionselemente an dem Türmodulträger.

Diese Aufgabe wird erfindungsgemäß durch die Schaffung eines Türmodulträgers mit den Merkmalen des Patentanspruchs 1 gelöst.

Danach ist zumindest ein Teil der zweiten Befestigungsstellen an mindestens einem zur Befestigung einer Türinnenverkleidung an der Trägerplatte 1 vorgesehenen und dienenden Befestigungsbereich vorgesehen, der außerhalb des von der Dichtungskontur umgebenen Abschnittes der Trägerplatte an dieser angeformt ist und der in den Trockenraum des Fahrzeugs ragt.

Durch die erfindungsgemäße Anordnung von Befestigungsstellen an Befestigungsbereichen, die außerhalb der Dichtungskontur der Trägerplatte im Trockenraum liegen, wird erreicht, dass diese zweiten Befestigungsstellen (die häufig durch Befestigungsöffnungen gebildet werden) die Nass-/Trockenraum-Trennung nicht beeinträchtigen. Insbesondere ist es nicht erforderlich, im Bereich der genannten Befestigungsstellen zusätzliche Maßnahmen zur Abdichtung des Trockenraumes gegenüber dem Nassraum vorzusehen.

Die erfindungsgemäße Anordnung der zweiten Befestigungsstellen ist für unterschiedliche Funktionselemente, die an dem Türmodulträger befestigt werden sollen, verwendbar, z.B. für Kabelstränge, Türgriffe und/oder Teile des Schließsystems. Besonders vorteilhaft ist jedoch die Verwendung bei der Befestigung einer Türinnenverkleidung an dem Türmodulträger.

Je nach Verwendungszweck können die zweiten Befestigungsbereiche an unterschiedlichen Stellen der Trägerplatte angeformt sein und auch in unterschiedlichen Richtungen von der Trägerplatte abstehen, beispielsweise in der durch die Trägerplatte definierten Ebene oder auch aus dieser Ebene heraus.

Darüber hinaus kann vorgesehen sein, dass die Befestigungsbereiche, die außerhalb der Dichtungskontur an der Trägerplatte angeformt sind, nach innen über die Trägerplatte geführt sind, wenn dies für den jeweiligen Befestigungszweck vorteilhaft ist. Bei aus Blech bestehenden Trägerplatten können die Befestigungsbereiche hierzu nach innen umgebogen sein. Besteht die Trägerplatte demgegenüber aus Kunststoff, so kann hierfür ein Scharnier vorgesehen sein oder der entsprechende Befestigungsbereich ist unmittelbar derart geformt, dass er sich von außerhalb der Dichtungskontur nach innen über die Trägerplatte erstreckt.

Eine gewisse Elastizität der Befestigungsbereiche ermöglicht einen Toleranzausgleich bei der Fixierung der Türinnenverkleidung relativ zu dem Türmodulträger.

Die Befestigungsstellen sind z. B. derart ausgebildet, daß die Verbindung mit einem an der Trägerplatte zu befestigenden Funktionselement über einen Befestigungshaken erfolgen kann, der in eine zugeordnete Befestigungsöffnung eingreift, wobei an den Befestigungsbereichen wahlweise die Befestigungsöffnungen oder die Befestigungshaken vorgesehen sein können. An dem zugehörigen Funktionselement befindet sich dann jeweils mindestens ein Befestigungselement vom anderen Typ.

Wenn die Trägerplatte oder das Funktionselement aus Kunststoff bestehen, können die Befestigungshaken hieran in einfacher Weise einstückig angeformt sein.

Die Verwendung von Befestigungshaken zur Befestigung von Funktionselementen an der Trägerplatte hat gegenüber anderen Befestigungsmitteln, wie Schraubverbindungen oder Nietverbindungen, den Vorteil, dass bei Montage oder Transport keine Befestigungsmittel verloren gehen können.

Die Befestigungsöffnungen werden z. B. durch Schlitze gebildet, in die die Befestigungshaken einführbar sind und in denen die Befestigungshaken in Schlitzlängsrichtung verschiebbar sind.

Hierbei können mehrere zur Befestigung eines Funktionselementes vorgesehene Befestigungsöffnungen (Schlitze) parallel verlaufen, so dass zur Montage des entsprechenden Funktionselementes die jeweiligen Befestigungshaken in die zugeordneten Schlitze eingefädelt werden und dann entlang der Längsrichtung der Schlitze in ihre Endposition (Funktionsposition) verschoben werden.

Gemäß einer Ausführungsform der Erfindung, die insbesondere zur Befestigung einer Türinnenverkleidung an dem Türmodulträger verwendet werden kann, verlaufen die Schlitze im wesentlichen in vertikaler Richtung (entlang der Fahrzeug-z-Achse), wenn der Türmodulträger an dem Türkörper befestigt ist. Diese Art der Befestigung einer Türinnenverkleidung an einem Türmodulträger ist besonders vorteilhaft im Hinblick auf die Auslegung der Fahrzeugtür für einen eventuellen Seitenaufprall (Seiten-Crash).

Zur Fixierung einer Türinnenverkleidung an dem Türmodulträger können zusätzlich zu den in z-Richtung verlaufenden Schlitzen noch weitere Befestigungsstellen an Befestigungsbereichen vorgesehen sein, die an der Unterseite des Türmodulträgers angeformt sind und im wesentlichen quer von diesem abstehen.

Weitere Merkmale und Vorteile der Erfindung werden bei der nachfolgenden Beschreibung eines Ausführungsbeispiels anhand der Figuren deutlich werden.

Es zeigen:
- Figur 1 -: einen Türmodulträger, der an dem Türkörper einer Kraftfahrzeugtür befestigbar ist und zur Aufnahme verschiedener Funktionselemente der Fahrzeugtür dient;
- Figur 2a -: einen Ausschnitt des Türmodulträgers aus Figur 1 im Bereich einer Befestigungsstelle, über die eine Türinnenverkleidung an dem Türmodulträger befestigt ist;
- Figur 2b -: einen weiteren Ausschnitt des Türmodulträgers aus Figur 1 im Bereich einer Befestigungsstelle, über die die Türinnenverkleidung an dem Türmodulträger befestigt ist;
- Figur 3 -: eine Abwandlung des Türmodulträgers aus Figur 1;
- Figur 4a -: einen Ausschnitt einer weiteren Abwandlung des Türmodulträgers aus Figur 1 im Bereich einer Befestigungsstelle, über die eine Türinnenverkleidung an dem Türmodulträger befestigt ist;
- Figur 4b -: eine Schnittdarstellung des Auschnittes aus Fig. 4a;
- Figur 5 -: eine schematische Darstellung einer Fahrzeugtür mit einem Türmodulträger.

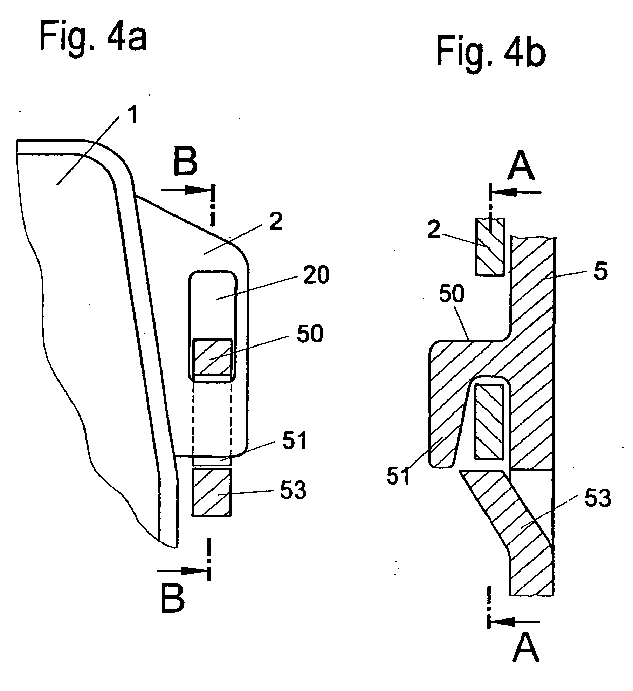

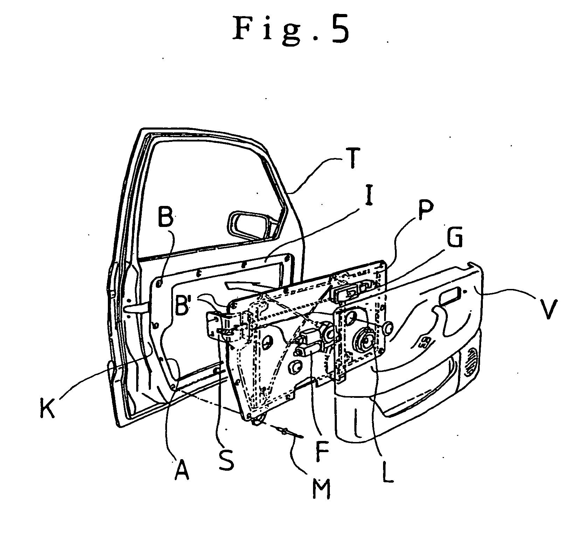

Fig. 5 zeigt eine Kraftfahrzeugtür T mit einem Türkörper K, dessen Innenhaut I (z.B. Innenblech) eine großflächige Aussparung A aufweist, die mit einer Trägerplatte P eines Türmodules abgedeckt ist. Die Trägerplatte P ist über Befestigungsstellen B, B' der Türinnenhaut I einerseits und der Trägerplatte P andererseits und über zugeordnete Befestigungsmittel M mit der Türinnenhaut I verbunden. Die Trägerplatte P trägt z.B. einen Fensterheber F, einen Türbetätigungsgriff G, einen Lautsprecher L und eine Türschloß S, wodurch ein vormontierbares und vorprüfbares Türmodul gebildet wird. Dieses Ensemble wird nach Innen abgedeckt durch eine Türinnenverkleidung V, die in Fig. 4 durchscheinend gezeichnet ist und die in nicht näher dargestellter Weise mit der Tür T, z.B. mit der Trägerplatte P, verbunden wird.

Die Türinnenhaut I und die daran befestigte Trägerplatte P bilden eine Trennwand, durch die der Naßraum der Tür vom Trockenraum des Fahrzeugs getrennt ist.

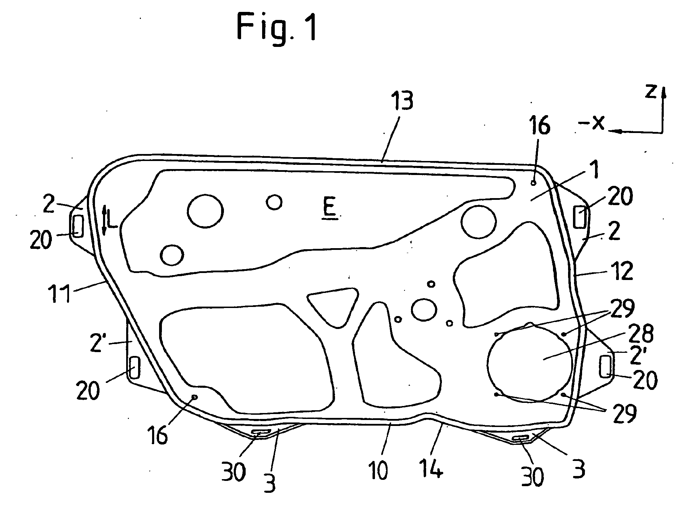

In Figur 1 ist ein erfindungsgemäß gestalteter Türmodulträger dargestellt mit einer Trägerplatte 1, die zur Aufnahme unterschiedlicher Funktionskomponenten einer Fahrzeugtür, wie z.B. eines Fensterhebers, eines Türschlosses, eines Lautsprechers (ggf. separater Hoch- und Tieftöner), eines Türgriffs, Teilen des Schließsystems, eines Airbagmodules, einer Beleuchtung, von Kabelsträngen sowie einer Türinnenverkleidung dienen kann.

Die Trägerplatte 1 ist mittels erster Befestigungsstellen 16, von denen in Figur 1 nur zwei beispielhaft dargestellt sind, an dem Türkörper einer Fahrzeugtür befestigbar, insbesondere an deren Innenhaut, und bildet dort einen Bestandteil einer Trennwand, die den Nassraum vom Trockenraum des Fahrzeugs trennt. Um hier eine dichtende Trennung zu gewährleisten, weist die Trägerplatte eine umlaufende Dichtungskontur 10 auf, entlang der die die Trägerplatte 1 an dem Türkörper anliegt, z.B. über eine entlang der Dichtungskontur 10 verlaufende Dichtraupe, so dass eine feuchtigkeitsdichte Anlage der Trägerplatte 1 an dem Türkörper gewährleistet wird.

Neben den bereits erwähnten ersten Befestigungsstellen 16, die zur Befestigung der Trägerplatte 1 an einem Türkörper dienen, weist die Trägerplatte 1 noch eine Vielzahl weiterer Befestigungsöffnungen sowie Aufnahmeöffnungen für Funktionselemente einer Fahrzeugtür auf. Beispielhaft sei hier eine Aufnahme 28 für einen Lautsprecher erwähnt, die von vier Befestigungsstellen 29 zur Befestigung des Lautsprechers an der Trägerplatte 1 umgeben ist.

Außerhalb der Dichtungskontur 10 sind an der Trägerplatte 1 insgesamt sechs Befestigungsbereiche 2, 2', 3 angeformt, die zur Befestigung einer Türinnenverkleidung an der Trägerplatte 1 dienen. Dabei sind vier Befestigungsbereiche 2, 2' einander paarweise gegenüberliegend an den beiden in Fahrzeuglängsrichtung x (bezogen auf die Orientierung der Trägerplatte 1 in dem Zustand, in dem sie in eine Fahrzeugtür eingebaut ist) voneinander beabstandeten Stirnseiten 11, 12 der Trägerplatte 1 (d.h. Orientierung der Trägerplatte 1 in dem Zustand, in dem sie in eine Fahrzeugtür eingebaut ist) voneinander beabstandeten Stirnseiten 11, 12 der Trägerplatte 1 (d.h. zwischen deren Oberkante 13 und Unterkante 14) angeformt. Diese Befestigungsbereiche stehen dabei jeweils in der durch die Trägerplatte 1 defenierten Ebene E von dieser ab. Jeder dieser Befestigungsbereiche 2, 2' weist eine Befestigungsöffnung 20 in Form eines Schlitzes auf, der sich in einer Richtung L parallel zur vertikalen Fahrzeugachse (z-Achse) erstreckt. Diese Schlitze 20 sind derart ausgebildet, dass sie zur Aufnahme eines Hakens zum Zwecke der Befestigung dienen können.

Zwei weitere Befestigungsbereiche 3 sind an der Unterkante 14 der Trägerplatte 1 angeformt und stehen im Wesentlichen senkrecht von dieser ab, und zwar in Richtung auf den Trockenraum (bezogen auf den Zustand, in dem die Trägerplatte in eine Fahrzeugtür eingebaut ist). Jeder dieser Befestigungsbereiche 3 weist Befestigungsöffnungen 30 auf, in die ein Vorsprung der Innenverkleidung zum Zwecke der Fixierung der Türinnenverkleidung an der Trägerplatte 1 eindringen kann.

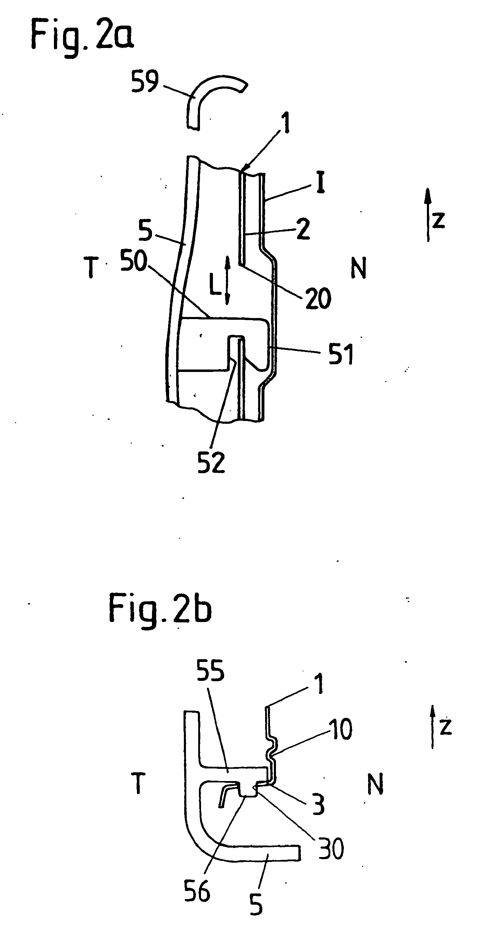

Sämtliche außerhalb der Dichtungskontur vorgesehene Befestigungsbereiche 2, 2', 3 erstrecken sich dabei vollständig im Trockenraum T (vergleiche Figur 2a) eines Fahrzeugs, so dass die die Befestigungsöffnungen 20, 30 der Befestigungsbereiche 2, 2', 3 durchgreifenden Befestigungsmittel 50 nicht in den Nassraum N ragen.

Figur 2a zeigt einen Ausschnitt aus dem Türmodulträger gemäß Figur 1 im Bereich eines Befestigungsbereiches 2 sowie des zugehörigen Schlitzes 20 im Querschnitt. Weiterhin ist in Figur 2a erkennbar ein Teil des Türkörpers, genauer: ein Teil der Türinnenhaut I, an der die Trägerplatte 1 befestigt ist. Die Trägerplatte überdeckt hierbei üblicherweise einen großflächigen Ausschnitt in der Innenhaut I, dessen Form an die Form der Trägerplatte 1 angepaßt ist. Die Türinnenhaut I und die Trägerplatte 1 bilden zusammen eine Trennwand, durch die der Trockenraum T des Fahrzeugs von dem Nassraum N getrennt wird. Der Nassraum wird dabei gebildet durch diejenigen Teile der Tür, die sich nach außen hin an die durch die Innenhaut I und die Trägerplatte 1 gebildete Trennwand anschließen, während der Trockenraum T auf der dem Fahrzeuginnenraum zugewandten Seite der besagten Trennwand liegt.

Ferner ist in Figur 2a dargestellt ein Teil einer Türinnenverkleidung 5, die an der Trägerplatte 1 befestigt ist, und zwar über Haken 50, die in die Schlitze 20 der Befestigungsbereiche 2 eingreifen. Hierbei hintergreift der Haken 50 mit einem abgewinkeltem Endabschnitt 51 den unteres Rand des Schlitzes 20, so dass der untere Rand des Schlitzes 20 in eine an das abgewinkelte Ende 51 anschließende Ausnehmung 52 des Hakens 50 eingreift. In entsprechender Weise greifen auch an den anderen Befestigungsbereichen 2, 2' jeweils Haken 50 der Türinnenverkleidung 5 in die an den Befestigungsbereichen 2,2' vorgesehenen Schlitze 20 ein.

Es ist erkennbar, dass der Haken 50 in dem Schlitz 20 in Schlitzlängrichtung L parallel zur z-Achse verschiebbar ist. Hierdurch läßt sich die Verbindung zwischen der Türinnenverkleidung und der Trägerplatte 1 lösen, indem die Türinnenverkleidung 5 zusammen mit dem einstückig angeformten Haken 50 entlang der z-Achse nach oben verschoben wird und dann in Richtung des Trockenraumes T von der Trägerplatte 1 abgenommem wird.

Die Erstreckungsrichtung L der Schlitze 20 kann eine Komponente in Fahrzeuglängsrichtung x aufweisen, wodurch eine spielfreie Montage der Türinnenverkleidung in der Fahrzeugtür erleichtert wird, da die Türinnenverkleidung 5 bei der Montage zugleich eine Bewegung in Fahrzeuglängsrichtung x ausführen kann und dabei gegen eine Stirnseite der Tür gedrückt wird.

Die Haken 50 und die zugehörigen Schlitze 20 sind im übrigen allgemein zur Befestigung von Funktionsgruppen an einer Fahrzeugtür vorteilhaft geeignet, also auch dann, wenn die Befestigungsstellen innerhalb und nicht außerhalb der Dichtungskontur 10 liegen.

In Figur 2a ist schließlich auch noch das obere Ende der Türinnenverkleidung 5 dargestellt, das einen abgewinkelten Endabschnitt 59 aufweist, der ein Einhängen der Tüinnenverkleidung im Bereich der Türbrüstung ermöglicht.

Figur 2b zeigt in einem Querschnitt einen Ausschnitt der Trägerplatte 1 gemäß Figur 1 im Bereich eines Befestigungsbereiches 3 der unterhalb der Dichtungskontur 10 in Richtung auf den Trockenraum T senkrecht von der Trägerplatte 1 absteht. Die Türinnenverkleidung 5 weist in ihrem unteren Endabschnitt einen in Richtung auf die Trägerplatte 1 abgewinkelten Abschnitt 55 mit einem nach unten (entgegen der z-Richtung) abstehenden Vorsprung 56 auf, der in die Befestigungsöffnung 30 (vergleiche Figur 1) des Befestigungsbereiches 3 einschiebbar ist. Hierdurch erfolgt eine zusätzliche Fixierung der Türinnenverkleidung 5 an der Trägerplatte 1 im Bereich ihres unteren Endes. Auch diese Verbindung läßt sich durch Verschieben der Türinnenverkleidung 5 nach oben entlang der z-Richtung lösen.

Es kann vorgesehen sind, dass die Türinnenverkleidung 5 vor dem Einbau in eine Fahrzeugtür zunächst schwimmend auf der Trägerplatte 1 gelagert wird, z.B. indem zunächst lediglich Haken 50 der Türinnenverkleidung 5 in die Schlitze 20 der seitlichen Befestigungsbereiche 2 und/oder 2' der Trägerplatte 1 eingreifen und noch keine zusätzliche Befestigung über die untereren Befestigungsbereiche 3 der Trägerplatte 1 erfolgt. Gegebenenfalls kann stattdessen in diesem Bereich eine provisorische Verbindung zwischen Türinnenverkleidung 5 und Trägerplatte 1 vorgesehen sein, die der schwimmenen Lagerung nicht entgegensteht.

Die Trägerplatte 1 und die Türinnenverkleidung 5 können dann als separate, vorgefertigte und gegebenenfalls mit weiteren Komponenten bestückte Module bereitgestellt und zunächst schwimmend miteinander verbunden werden. Erst bei der Montage und Ausrichtung dieser beiden Komponenten in einer Fahrzeugtür erfolgt deren endgültige Befestigung über sämtlich Befestigungsbereiche 2, 2', 3.

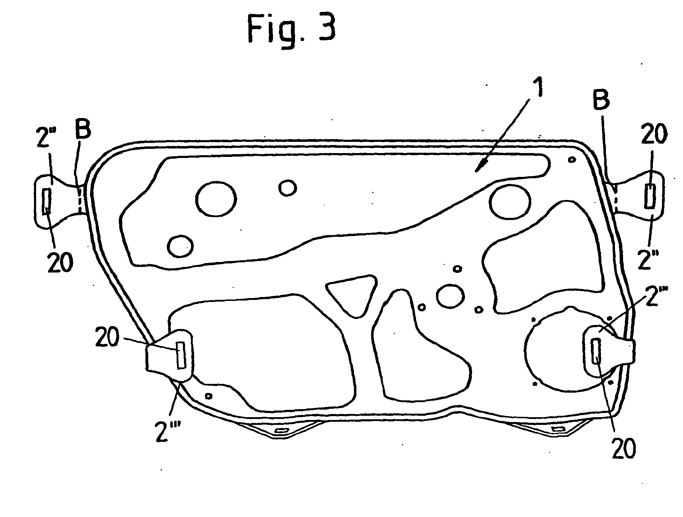

Figur 3 zeigt eine Abwandlung des Ausführungsbeispiels aus Figur 1, wobei die Unterschiede lediglich in der Ausgestaltung der an der Trägerplatte 1 angeformten seitlichen Befestigungsbereiche liegen. Diese Befestigungsbereiche 2", 2"'weisen jeweils eine Biegekante B auf, um die sie nach innen über die Trägerplatte 1 biegbar sind. Dabei sind in Figur 3 die oberen seitlichen Befestigungsbereiche 2"vor dem nach innen Biegen und die unteren seitlichen Befestigungsbereich 2'" nach dem nach innen Biegen dargestellt. Auch diese Befestigungsbereiche 2', 2"'weisen jeweils Befestigungsöffnungen in Form von Schlitzen 20 auf, die in entsprechender Weise wie bei dem in den Figuren 1 und 2 dargestelltem Ausführungsbeispiel zur Aufnahme einer Türinnenverkleidung dienen.

Wird an Stelle eines üblichen Türmodulträgers aus Metall ein Türmodulträger aus Kunststoff verwendet, so können an Stelle der Biegebereiche B Scharniere, z.B. Filmscharniere, vorgesehen sein, um das Umklappen der Befestigungsbereiche nach innen zu ermöglichen.

Die Figuren 4a und 4b zeigen einen Ausschnitt einer Abwandlung des Türmodulträgers gemäß Figur 1 im Bereich eines Befestigungsbereiches 2 sowie des zugehörigen Schlitzes 20. Hierbei weist die Türinnenverkleidung 5 im Bereich des Hakens 50 zusätzlich ein einstückig angeformtes, von der Türinnenverkleidung 5 abstehendes elastisches Schnappelement 53 auf, das beim Einführen des Hakens 50 in den Schlitz 20 durch die Trägerplatte 1 seitlich weggedrückt wird und das nach dem Einführen des Hakens 50 in den Schlitz 20 den Haken 50 gegen ein Herausrutschen aus dem Schlitz 20 sichert. Zum Ausfädeln des Hakens 50 aus dem Schlitz 20 muß dieses Schnappelement 53 zunächst mittels eines geeigneten Werkzeuges betätigt (seitlich weggedrückt) werden.

Die in den Figuren 1 bis 4b dargestellten Befestigungsbereiche und die zugehörigen Schlitze können auch weitere Funktionen als Transporthilfen, als Griff-Laschen oder als Referenzpunkte bei der Montage übernehmen.

Ferner können bei den in den Figuren 1 bis 4b dargestellten Ausführungsbeispielen auch jeweils die Haken an den Befestigungsabschnitten der Trägerplatte und die Schlitze an der Türinnenverkleidung vorgesehen sein. Dies ist insbesondere dann vorteilhaft, wenn die Trägerplatte 1 aus Kunststoff besteht.

Außerdem können an den Befestigungsbereichen noch zusätzliche Bauelemente befestigt sein, die bei der Montage benötigt werden und anschließend abbrechbar sein.

Schließlich kann der Teil des Trockenraumes T der Fahrzeugtür, der sich zwischen der Trägerplatte 1 und der Türinnenverkleidung 5 erstreckt, als/für ein Ablagefach genutzt werden.

## Patentansprüche

1. Türmodulträger zur Befestigung an einem Türkörper zwischen dem Nassraum und dem Trockenraum eines Kraftfahrzeugs mit
- einer Trägerplatte (1) zur Aufnahme von Funktionselementen einer Fahrzeugtür, z.B. eines Fensterhebers, eines Türschlosses, eines Türgriffes und/oder einer Türinnenverkleidung,
- ersten Befestigungsstellen (B', 16) der Trägerplatte (1), die zur Befestigung der Trägerplatte (1) an dem Türkörper (K) dienen, wobei im montierten Zustand eine Oberfläche der Trägerplatte (1) den Trockenraum (T) und die andere Oberfläche der Trägerplatte (1) dem Nassraum (N) zugewandt ist,
- darüber hinaus zweiten Befestigungsstellen (20, 30) der Trägerplatte (1), wobei die zweiten Befestigungstellen verschieden von den ersten Befesfigunstellen sind und zur Befestigung mindestens eines Funktionselementes an der Trägerplatte vorgesehen sind und dienen, und
- einer an der Trägerplatte (1) umlaufenden Dichtungskontur (10), entlang der die Trägerplatte (1) sich im montierten Zustand dichtend an den Türkörper (K) legt,
**dadurch gekennzeichnet,**
**dass** zumindest ein Teil der zweiten Befestigungsstellen (20, 30) an Befestigungsbereichen (2, 2', 2", 2"',3) vorgesehen ist, die außerhalb des von der Dichtungskontur (10) umgebenen Abschnittes der Trägerplatte (1) an diese angeformt sind und in den Trockenraum (T) ragen und die zur Befestigung einer Türinnenverkleidung an der Trägerplatte (1) vorgesehen sind und dienen.

2. Türmodulträger nach Anspruch 1, **dadurch gekennzeichnet, dass** Befestigungsbereiche (2, 2') vorgesehen sind, die in einer durch die Trägerplatte (1) definierten Ebene (E) von der Trägerplatte (1) abstehen.

3. Türmodulträger nach Anspruch 1 oder 2, **dadurch gekennzeichnet, dass** Befestigungsbereiche (3) vorgesehen sind, die aus einer von der Trägerplatte (1) definierten Ebene heraus von der Trägerplatte (1) abstehen.

4. Türmodulträger nach einem der vorhergehenden Ansprüche, **dadurch gekennzeichnet, dass** Befestigungsbereiche (3) vorgesehen sind, die winklig zu der durch die Trägerplatte (1) definierten Ebene (E) von der Trägerplatte (1) abstehen.

5. Türmodulträger nach Anspruch 4, **dadurch gekennzeichnet, dass** Befestigungsbereiche (3) vorgesehen sind, die senkrecht zu der durch die Trägerplatte (1) definierten Ebene (E) von der Trägerplatte (1) abstehen.

6. Türmodulträger nach einem der vorhergehenden Ansprüche, **dadurch gekennzeichnet, dass** Befestigungsbereiche (2", 2"') vorgesehen sind, die außerhalb der Dichtungskontur (10) an der Trägerplatte (1) angeformt sind und nach innen über die Trägerplatte (1) geführt sind, indem sie nach innen über die Trägerplatte (1) umgebogen oder umgeklappt sind.

7. Türmodulträger nach einem der vorhergehenden Ansprüche, **dadurch gekennzeichnet, dass** die an den Befestigungsbereichen (2, 2', 2", 2"', 3) vorgesehenen zweiten Befestigungsstellen (20, 30) durch Befestigungsöffnungen gebildet werden.

8. Türmodulträger nach einem der vorhergehenden Ansprüche, **dadurch gekennzeichnet, dass** vier Befestigungsbereiche (2, 2') einander paarweise gegenüberliegend an den beiden in Fahrzeuglängsrichtung (x) - bezogen auf die Orientierung der Trägerplatte (1) in dem Zustand, in dem sie in eine Fahrzeugtür eingebaut ist - voneinander beabstandeten Stirnseiten (11, 12) der Trägerplatte (1) angeformt sind.

9. Türmodulträger nach Anspruch 8, **dadurch gekennzeichnet, dass** zusätzliche Befestigungsbereiche (3) von der Unterkante (14) der Trägerplatte (1) abstehen, und zwar vorzugsweise winklig zu der durch die Trägerplatte (1) definierten Erstreckungsebene (E).

10. Türmodulträger nach einem der vorhergehenden Ansprüche, **dadurch gekennzeichnet, dass** die Trägerplatte (1) im an dem Türkörper befestigten Zustand einen Bestandteil einer Trennwand bildet, die den Nassraum vom Trockenraum des Fahrzeugs trennt.

11. Türmodulträger nach einem der vorhergehenden Ansprüche, **dadurch gekennzeichnet, dass** an den zweiten Befestigungsstellen (20, 30) eine Türinnenverkleidung (5) befestigt ist.

12. Türmodulträger nach einem der vorhergehenden Ansprüche, **dadurch gekennzeichnet, dass** die Türinnenverkleidung (5) aus Kunststoff besteht.

13. Türmodulträger nach Anspruch 11 oder 12, **dadurch gekennzeichnet, dass** ein oberes Ende der Türinnenverkleidung (5) einen abgewinkelten Endabschnitt (59) aufweist, der ein Einhängen der Türinnenverkleidung (5) im Bereich der Türbrüstung ermöglicht.

14. Türmodulträger nach einem der vorhergehenden Ansprüche, **dadurch gekennzeichnet, dass** an den zweiten Befestigungsstellen wahlweise ein Airbagmodul, eine Beleuchtungseinheit, eine Lautsprechereinheit, ein Kabelstrang, ein Türgriff und/oder Teile eines Schließsystems befestigt sind.

15. Kraftfahrzeugtür mit einem Türmodulträger nach einem der vorhergehenden Ansprüche.

16. Kraftfahrzeugtür nach Anspruch 15, **dadurch gekennzeichnet, dass** der Türmodulträger zwischen dem Nassraum und dem Trockenraum der Kraftfahrzeugtür befestigt ist.

17. Kraftfahrzeugtür nach Anspruch 15 oder 16, **gekennzeichnet durch** einen Türkörper (K), dessen Innenhaut (I) eine großflächige Aussparung (A) aufweist, die mit der Trägerplatte (P, 1) abgedeckt ist.

18. Kraftfahrzeugtür nach Anspruch 17, **dadurch gekennzeichnet, dass** die Trägerplatte (P, 1) über Befestigungsstellen (B, B') der Türinnenhaut (I) einerseits und der Trägerplatte (P, 1) andererseits und über zugeordnete Befestigungsmittel (M) mit der Türinnenhaut (I) verbunden ist.

19. Kraftfahrzeugtür nach Anspruch 17 oder 18, **dadurch gekennzeichnet, dass** die Türinnenhaut (I) und die daran befestigte Trägerplatte (P, 1) eine Trennwand bilden, durch die der Nassraum der Tür vom Trockenraum des Fahrzeugs getrennt ist.

20. Kraftfahrzeugtür nach einem der Ansprüche 17 bis 19, **dadurch gekennzeichnet, dass** die Trägerplatte (1) eine umlaufende Dichtungskontur (10) aufweist, entlang der die Trägerplatte (1) an dem Türkörper anliegt.

21. Kraftfahrzeugtür nach Anspruch 20, **dadurch gekennzeichnet, dass** die Trägerplatte (1) über eine entlang der Dichtungskontur (10) verlaufende Dichtraupe an dem Türkörper anliegt.

22. Kraftfahrzeugtür Anspruch 20 oder 21, **dadurch gekennzeichnet, dass** sämtliche außerhalb der Dichtungskontur (10) vorgesehene Befestigungsbereiche (2, 2', 3) sich vollständig im Trockenraum (T) erstrecken.

23. Kraftfahrzeugtür nach einem der Ansprüche 16 bis 22, **dadurch gekennzeichnet, dass** der Nassraum durch diejenigen Teile der Tür gebildet wird, die sich nach außen hin an die durch die Innenhaut (I) und die Trägerplatte (1) gebildete Trennwand anschließen, während der Trockenraum (T) auf der dem Fahrzeuginnenraum zugewandten Seite der besagten Trennwand liegt.

24. Kraftfahrzeugtür nach einem der Ansprüche 16 bis 23, **dadurch gekennzeichnet, dass** der Teil des Trockenraumes (T) der Fahrzeugtür, der sich zwischen der Trägerplatte (1) und der Türinnenverkleidung (5) erstreckt, als ein Ablagefach genutzt wird.

## Claims

1. Door module carrier for fastening to a door body between the wet room and the dry room of a motor vehicle, comprising
- a carrier plate (1) for receiving function elements of a vehicle door, e.g. a window lifter, a door lock, a door handle and/or a door lining,
- first fastening sites (B', 16) of the carrier plate (1) which serve for fastening the carrier plate (1) to the door body (K), wherein, in the mounted state, a surface of the carrier plate (1) faces the dry room (T) and the other surface of the carrier plate (1) faces the wet room (N),
- furthermore second fastening sites (20, 30) of the carrier plate (1), wherein the second fastening sites differ from the first fastening sites and are provided for and serve for fastening at least one function element to the carrier plate, and
- a sealing contour (10) circulating on the carrier plate (1) along which sealing contour (10) the carrier plate sealingly butts against the door body (K) in the mounted state,
**characterized in that**,
at least a part of the second fastening sites (20, 30) is provided on fastening regions (2, 2', 2", 2"', 3) which are integrally formed with the carrier plate (1) outside the portion of the carrier plate (1) surrounded by the sealing contour (10) and protrude into the dry room (T) and which are provided for and serve for fastening a door lining to the carrier plate (1).

2. Door module carrier according to claim 1, **characterized in that** fastening regions (2, 2') are provided which protrude from the carrier plate (1) in a plane (E) defined by the carrier plate (1).

3. Door module carrier according to claim 1 or 2, **characterized in that** fastening regions (3) are provided which protrude from the carrier plate (1) out of a plane defined by the carrier plate (1).

4. Door module carrier according to one of the preceding claims, **characterized in that** fastening regions (3) are provided which protrude angularly from the carrier plate (1) with respect to the plane (E) defined by the carrier plate (1).

5. Door module carrier according to claims 4, **characterized in that** fastening regions (3) are provided which protrude perpendicularly from the carrier plate (1) with respect to the plane (E) defined by the carrier plate (1).

6. Door module carrier according to one of the preceding claims, **characterized in that** fastening regions (2", 2"') are provided which are integrally formed with the carrier plate (1) outside the sealing contour (10) and passed inwards over the carrier plate (1) by bending or turning them inwards over the carrier plate (1).

7. Door module carrier according to one of the preceding claims, **characterized in that** the second fastening sites (20, 30) provided on the fastening regions (2, 2', 2", 2"', 3) are formed by fastening openings.

8. Door module carrier according to one of the preceding claims, **characterized in that** four fastening regions (2, 2') facing each other in pairs are integrally formed with the two face sides (11, 12) of the carrier plate (1), which face sides (11, 12) are - related to the orientation of the carrier plate (1) in the state in which the latter is built into a vehicle door - spaced apart with respect to each other in the longitudinal vehicle direction (x).

9. Door module carrier according to one of the preceding claims, **characterized in that** the additional fastening regions (3) protrude from the lower edge (14) of the carrier plate (1), namely preferably angularly with respect to the extension plane (E) defined by the carrier plate (1).

10. Door module carrier according to one of the preceding claims, **characterized in that** the carrier plate (1), in the state in which it is fastened to the door body, forms a part of a separating wall that separates the wet room from the dry room of the vehicle.

11. Door module carrier according to one of the preceding claims, **characterized in that** a door lining (5) is fastened to the second fastening sites (20, 30).

12. Door module carrier according to one of the preceding claims, **characterized in that** the door lining (5) consists of a plastic.

13. Door module carrier according to claim 11 or 12, **characterized in that** an upper end of the door lining (5) comprises an angled end portion (59) that allows for hinging the door lining (5) in the region of the door rail.

14. Door module carrier according to one of the preceding claims, **characterized in that** an airbag module, a lighting device, a loud speaker device, a cable harness, a door handle and/or parts of a locking system are optionally fastened to the second fastening sites.

15. Motor vehicle door comprising a door module carrier according to one of the preceding claims.

16. Motor vehicle door according to claim 15, **characterized in that** the door module carrier is fastened between the wet room and the dry room of the motor vehicle door.

17. Motor vehicle door according to claim 15 or 16, **characterized by** a door body (K) whose inner skin (I) comprises a large-area recess (A) that is covered by the carrier plate (P, 1).

18. Motor vehicle door according to claim 17, **characterized in that** the carrier plate (P, 1) is connected to the door inner skin (I) via fastening sites (B, B') of the door inner skin (I) on the one hand and of the carrier plate (1) on the other hand and via fastening means (M).

19. Motor vehicle door according to claim 17 or 18, **characterized in that** the door inner skin (I) and the carrier plate (P, 1) fastened thereto form a separating wall by means of which the wet room of the door is separated from the dry room of the vehicle.

20. Motor vehicle door according to one of the claims 17 to 19, **characterized in that** the carrier plate (1) comprises a circulating sealing contour (10) along which the carrier plate (1) butts against the door body.

21. Motor vehicle door according to claim 20, **characterized in that** the carrier plate (1) butts against the door body via a sealing bead running along the sealing contour (10).

22. Motor vehicle door according to claim 20 or 21, **characterized in that** all of the fastening regions (2, 2', 3) provided outside the sealing contour (10) extend completely in the dry room (T).

23. Motor vehicle door according to one of the claims 16 to 22, **characterized in that** the wet room is formed by those parts of the door that join, towards the outside, to the separating wall formed by the inner skin (I) and the carrier plate (1), whereas the dry room (T) is located on the side of said separating wall facing the vehicle interior space.

24. Motor vehicle door according to one of the claims 16 to 23, **characterized in that** the part of the dry room (T) of the vehicle door that extends between the carrier plate (1) and the door lining (5) is used as a compartment.

## Revendications

1. Support pour module de portière destiné à être fixé sur un corps de porte entre l'espace humide et l'espace sec d'un véhicule automobile, comprenant
- une plaque porteuse (1) pour recevoir des éléments fonctionnels d'une porte de véhicule, par exemple un lève-vitre, une serrure de porte, une poignée de porte et/ou un habillage intérieur de porte,
- des premiers emplacements de fixation (B', 16) de la plaque porteuse (1), qui servent à la fixation de la plaque porteuse (1) sur le corps de porte (K), de sorte qu'à l'état monté une surface de la plaque porteuse (1) est tournée vers l'espace sec (T) et l'autre surface de la plaque porteuse (1) est tournée vers l'espace humide (N),
- des seconds emplacements de fixation (20, 30) de la plaque porteuse (1) étant en outre prévu, lesdits seconds emplacements de fixation étant différents des premiers emplacements de fixation et servant à la fixation d'au moins un élément fonctionnel sur la plaque porteuse, et
- un profilé d'étanchement (10) périphérique sur la plaque porteuse (1) étant disposé à l'état monté de façon étanche contre le corps de porte (K) le long de la plaque porteuse (1),
**caractérisé en ce qu'**au moins une partie des seconds emplacements de fixation (20, 30) sont prévus à des zones de fixation (2, 2', 2", 2"', 3) qui sont conformées sur la plaque porteuse (1) à l'extérieur du tronçon de celle-ci qui est entouré par le profilé d'étanchement (10) et pénètrent dans l'espace sec (T) et qui servent à la fixation d'un habillage intérieur de porte sur la plaque porteuse (1).

2. Support pour module de portière selon la revendication 1, **caractérisé en ce qu'**il est prévu des zones de fixation (2, 2') qui dépassent depuis la plaque porteuse (1) dans un plan (E) défini par la plaque porteuse (1).

3. Support pour module de portière selon la revendication 1 ou 2, **caractérisé en ce qu'**il est prévu des zones de fixation (3) qui dépassent depuis la plaque porteuse (1) hors d'un plan défini par la plaque porteuse (1).

4. Support pour module de portière selon l'une des revendications précédentes, **caractérisé en ce qu'**il est prévu des zones de fixation (3) qui dépassent depuis la plaque porteuse (1) sous un angle par rapport au plan (E) défini par la plaque porteuse (1).

5. Support pour module de portière selon la revendication 4, **caractérisé en ce qu'**il est prévu des zones de fixation (3) qui dépassent depuis la plaque porteuse (1) sous un angle droit par rapport au plan (E) défini par la plaque porteuse (1).

6. Support pour module de portière selon l'une des revendications précédentes, **caractérisé en ce qu'**il est prévu des zones de fixation (2", 2"') qui sont conformées sur la plaque porteuse (1) à l'extérieur du profilé d'étanchement (10) et qui sont menées vers l'intérieur par-dessus la plaque porteuse (1), **en ce qu'**elles sont repliées ou rabattues vers l'intérieur par-dessus la plaque porteuse (1).

7. Support pour module de portière selon l'une des revendications précédentes, **caractérisé en ce que** les seconds emplacements de fixation (20, 30) prévus au niveau des zones de fixation (2, 2', 2", 2"', 3) sont formés par des ouvertures de fixation.

8. Support pour module de portière selon l'une des revendications précédentes, **caractérisé en ce qu'**il est prévu quatre zones de fixation (2, 2') mutuellement opposées par paires, conformées sur deux côtés frontaux (11, 12) écartés l'un de l'autre de la plaque porteuse (1) en direction longitudinale du véhicule (x) - par référence à l'orientation de la plaque porteuse (1) dans la situation dans laquelle elle est intégrée dans une porte de véhicule -.

9. Support pour module de portière selon la revendication 8, **caractérisé en ce que** des zones de fixation additionnelles (3) dépassent de l'arête inférieure (14) de la plaque porteuse (1), et cela de préférence sous un angle par rapport au plan d'extension (E) défini par la plaque porteuse (1).

10. Support pour module de portière selon l'une des revendications précédentes, **caractérisé en ce que** la plaque porteuse (1) forme, dans la situation fixée sur le corps de porte, un élément constitutif d'une cloison de séparation qui sépare l'espace humide de l'espace sec du véhicule automobile.

11. Support pour module de portière selon l'une des revendications précédentes, **caractérisé en ce qu'**un habillage intérieur de porte (5) est fixée sur les seconds emplacements de fixation (20, 30).

12. Support pour module de portière selon l'une des revendications précédentes, **caractérisé en ce que** l'habillage intérieur de porte (5) est en matière plastique.

13. Support pour module de portière selon la revendication 11 ou 12, **caractérisé en ce qu'**une extrémité supérieure de l'habillage intérieur de porte (5) comprend un tronçon d'extrémité coudé (59), qui permet à un accrochage de l'habillage intérieur de porte (5) dans la zone de la ceinture de porte.

14. Support pour module de portière selon l'une des revendications précédentes, **caractérisé en ce que**, au choix, un module d'airbag, une unité d'éclairage, une unité à haut-parleur, un faisceau de câbles, une poignée de porte et/ou des parties d'un système de fermeture sont fixés sur les seconds emplacements de fixation.

15. Porte de véhicule automobile comprenant un support pour module de portière selon l'une des revendications précédentes.

16. Porte de véhicule automobile selon la revendication 15, **caractérisée en ce que** le support pour module de portière est fixé entre l'espace humide et l'espace sec de la porte de véhicule automobile.

17. Porte de véhicule automobile selon la revendication 15 ou 16, **caractérisée par** un corps de porte (K) dont la peau intérieure (I) présente une échancrure (A) de grande surface, qui est recouverte par la plaque porteuse (P, 1).

18. Porte de véhicule automobile selon la revendication 17, **caractérisée en ce que** la plaque porteuse (P, 1) est reliée à la peau intérieure de porte (I) via des emplacements de fixation (B, B') de la peau intérieure de porte (I) d'une part et de la plaque porteuse (P, 1) d'autre part et via des organes de fixation associée (M).

19. Porte de véhicule automobile selon la revendication 17 ou 18, **caractérisée en ce que** la peau intérieure de porte (I) et la plaque porteuse (P, 1) fixée sur celle-ci forment une cloison de séparation grâce à laquelle l'espace humide de la porte est séparé de l'espace sec du véhicule.

20. Porte de véhicule automobile selon l'une des revendications 17 à 19, **caractérisée en ce que** la plaque porteuse (1) comprend un profilé d'étanchement périphérique (10) le long duquel la plaque porteuse (1) s'applique contre le corps de porte.

21. Porte de véhicule automobile selon la revendication 20, **caractérisée en ce que** la plaque porteuse (1) s'applique contre le corps de porte via un cordon d'étanchéité qui s'étend le long du profilé d'étanchéité (10).

22. Porte de véhicule automobile selon la revendication 20 ou 21, **caractérisée en ce que** la totalité des zones de fixation (2, 2', 3) prévues à l'extérieur du profilé d'étanchéité (10) s'étend totalement dans l'espace sec.

23. Porte de véhicule automobile selon l'une des revendications 16 à 22, **caractérisée en ce que** l'espace humide est formé par celles des parties de la porte qui se raccordent vers l'extérieur à la cloison de séparation formée par la peau intérieure (I) et par la plaque porteuse (1), tandis que l'espace sec (T) se trouve sur le côté de ladite cloison de séparation qui est tourné vers l'habitacle du véhicule.

24. Porte de véhicule automobile selon l'une des revendications 16 à 23, **caractérisé en ce que** la partie de l'espace humide (T) de la porte de véhicule qui s'étend entre la plaque porteuse (1) et l'habillage intérieur de porte (5) est utilisée comme casier de rangement.
